# EUROPEAN PATENT APPLICATION

(11) **EP 2 372 823 A2**
(43) Date of publication of application: **05.10.2011**
(21) Application number: 11160753.7
(22) Date of filing: 31.03.2011
(51) Int. Cl.: H01M 4/88, H01M 8/10

(54) **Electrode catalyst material and method of manufacturing the same**

(30) Priority: 02.04.2010 JP 2010086376
(71) Applicant: Hitachi Ltd., Tokyo 100-8280 (JP)
(72) Inventor: Suzuki, Shuichi, Chiyoda-ku Tokyo 100-8220 (JP); Kawaji, Jun, Chiyoda-ku Tokyo 100-8220 (JP); Takamori, Yoshiyuki, Chiyoda-ku Tokyo 100-8220 (JP); Morishima, Makoto, Chiyoda-ku Tokyo 100-8220 (JP)
(74) Representative: Beetz & Partner

(57) **Abstract**

The invention provides an electrode catalyst material (10) in which a resistance loss is reduced by enhancing an electric conductivity as a whole of an electrode catalyst as well as suppressing a corrosion and a disappearance by a catalyst metal in a conductive catalyst support so as to prevent a dropout and an aggregation of a catalyst metal particle (13), and a method of manufacturing the same. The electrode catalyst material (10) in accordance with the present invention is an electrode catalyst material (10) for a fuel cell having a catalyst metal particle (13) and a carbon support (11) supporting the catalyst metal particle (13), in which a carbon support protection layer (12) including a metal element is formed in a coating manner on a surface of the carbon support (11), a silicone is included at 20 atomic % or more in the metal element contained in the carbon support protection layer (12), and the silicone exists in a state of an oxide and a carbide.

## Description

### Background of the invention

### (1) Field of the invention

The present invention relates to an electrode catalyst material for a fuel cell, and more particularly to an electrode catalyst material for a proton-exchange membrane fuel cell and a method of manufacturing the same.

### (2) Description of related art

In accordance with a recent advance in a portable electronic progress of a portable electronic terminal and a progress of a ubiquitous society, a power supply having a high energy density, that is, a power supply being compact and having a long driving time is demanded. Further, as the power supply which is compact and has a long driving time, an expectation of a compact power generator which does not require any electrical charge (a micro power generator which can be easily replenished with a fuel) is going to be enhanced. In accordance with the background mentioned above, a proton-exchange membrane fuel cell has been made a study energetically.

The fuel cell is a power generation apparatus which can continuously pick up an electric power by continuously supplying a hydrogen coming to a fuel and an oxygen or the like coming to an oxidizing agent so as to make them react, and has such an advantage that it is possible to directly convert a chemical energy carried by the fuel into an electric energy at a high efficiency. A single cell of the fuel cell has an electrolyte and two electrodes (an anode and a cathode) inducing a desired electrochemical reaction while holding the electrolyte therebetween, the fuel is supplied to the anode side, and the oxidizing agent is supplied to the cathode side.

A fuel cell using an ion exchange membrane of a solid polymer as the electrolyte, and ion conducting a proton while using the hydrogen as the fuel is generically named as a proton-exchange membrane fuel cell (PEFC: polymer electrolyte fuel cell) in general, however, the fuel cell utilizing a methanol as the fuel is particularly called as a direct methanol type fuel cell (DMFC: direct methanol fuel cell). The PEFC and the DMFC have such a feature that they start quickly and can be activated at a room temperature, however, an improvement of a durability (particularly, an improvement of a durability of an electrolyte membrane and an electrode catalyst material) is one of important problems.

The electrode catalyst materials of the PEFC and the DMFC are generally utilized under a condition that a precious metal particle such as a platinum or the like serving as a catalyst is supported by a carbon support having a good conductivity. However, in the case that the catalyst metal is directly supported by the carbon support, there is a case that the carbon support itself corrodes and disappears on the basis of its catalytic action. As a result, the catalyst metal particles losing the catalyst support agglutinate and an effective surface area of the catalyst reaction becomes smaller, whereby there is generated such a problem that a power generation efficiency of the fuel cell is lowered.

There have been made a study of various methods for preventing the problem that the carbon support is corroded and disappears by the catalyst metal particle as mentioned above. For example, patent document 1 (JP-A-2004-172107) proposes an electrode catalyst for a fuel cell in which an intermediate layer constituted by a first metallic carbide (for example, carbide of Si, Zr, Ce, Ti, Ta or the like) preventing the corrosion of the conductive catalyst support is formed in the vicinity of at least the catalyst metal between the conductive catalyst support and the catalyst metal. Further, as a preferable aspect of the patent document 1, the catalyst metal particle is supported after forming the intermediate layer constructed by the first metallic carbide on the surface of the conductive catalyst support, the catalyst metal particle is supported, and a second metallic carbide coming to a sacrifice corrosion material is thereafter supported.

In addition, patent document 2 (JP-A-2004-363056) proposes a catalyst support electrode for a fuel cell in which a corrosion resisting metal oxide (for example, oxide of Al, Si, Zr, Ti, Ce, In, Sn or the like) supporting a catalyst metal fine particle is supported in a scattering manner on a conductive catalyst support (for example, a conductive carbon). In this case, since the metal oxide and the carbon generally have an inferior adhesion, it is hard to uniformly coat the surface of the carbon by the metal oxide, and it is hard to secure a durability due to its peeling tendency.

It is thought that the electrode catalyst for the fuel cell which is proposed in the patent document 1 has an effect of preventing the corrosion and the disappearance by the catalyst metal in the conductive catalyst support such as the carbon or the like so as to prevent a dropout and an aggregation of the catalyst metal particle. However, since the first metallic carbide (the intermediate layer) directly preventing the corrosion of the conductive catalyst support has a higher electric resistivity and an electric contact between the catalyst metal particle and the conductive catalyst support is smaller, it has such a weak point that a resistance loss tends to be larger as a whole of the electrode catalyst.

On the other hand, in the catalyst support electrode for the fuel cell which is proposed in the patent document 1, since the catalyst metal fine particle is supported by the corrosion resisting metal oxide particle, it is thought that it has an effect of preventing the dropout and the aggregation of the catalyst metal particle. However, since a part of the catalyst metal particles which are supported by the corrosion resisting metal oxide particle comes into contact with the conductive catalyst support such as the carbon or the like, it is impossible to avoid the corrosion and the disappearance of the conductive catalyst support. As a result, it has such a weak point that the resistance loss tends to be larger as a whole of the catalyst support electrode.

### Brief summary of the invention

Accordingly, an object of the present invention is to provide an electrode catalyst material in which a resistance loss is reduced by enhancing an electric conductivity as a whole of an electrode catalyst as well as suppressing a corrosion and a disappearance by a catalyst metal in a conductive catalyst support so as to prevent a dropout and an aggregation of a catalyst metal particle while solving the problem mentioned above, and a method of manufacturing the same. Further, an object of the present invention is to provide a proton-exchange membrane fuel cell having a high durability by applying the electrode catalyst material mentioned above to a fuel cell.

The present invention has the following features for achieving the object mentioned above.

An electrode catalyst material in accordance with the present invention is an electrode catalyst material for a fuel cell having a catalyst metal particle and a carbon support supporting the catalyst metal particle, in which a carbon support protection layer including a metal element is formed in a coating manner on a surface of the carbon support, a silicone is included at 20 atomic % or more in the metal element contained in the carbon support protection layer, and the silicone exists in a state of an oxide and a carbide.

Further, in order to achieve the object mentioned above, the present invention can be modified and changed as follows in the electrode catalyst material in accordance with the invention mentioned above.
(1) The other metal element than the silicone included in the carbon support protection layer is constructed by at least one which is selected from a titanium, a germanium, a niobium, a zirconium, a molybdenum, a ruthenium, a rhodium, a tin, a tantalum, a tungsten, and an osmium, and the other metal element than the silicon exists in a state of an oxide.
(2) An average thickness of the carbon support protection layer is less than 10 nm.
(3) A coating degree of the carbon support protection layer with respect to the carbon support is equal to or more than 40 %. In this case, the coating degree is defined as a rate of a water vapor adsorption BET specific surface area with respect to a nitrogen adsorption BET specific surface area (details thereof will be mentioned below).
(4) A membrane/electrode joint body of a proton-exchange membrane fuel cell integrated by bonding an anode, a solid polymer electrolyte membrane and a cathode, wherein an electrode catalyst material of at least one of the anode and the cathode is any one of the electrode catalyst materials mentioned above.
(5) A proton-exchange membrane fuel cell utilizing the membrane/electrode joint body.
(6) A fuel cell power generating system mounting the proton-exchanged membrane fuel cell mentioned above thereon.
   Further, a method of manufacturing an electrode catalyst material in accordance with the present invention is a method of manufacturing an electrode catalyst material for a proton-exchange fuel cell having a catalyst metal particle and a carbon support supporting the catalyst metal particle, in which a carbon support protection layer including a metal element is formed in a coating manner on a surface of the carbon support, a silicone is included at 20 atomic % or more in the metal element contained in the carbon support protection layer, and the silicone exists in a state of an oxide and a carbide, wherein the method comprises:
   a step of coating the carbon support by a precursor including a polycarbosilane derivative;
   a step of forming the carbon support protection layer by applying a heat treatment to the carbon support coated by the precursor; and
   a step of making the carbon support in which the carbon support protection layer is formed support the catalyst metal particle.
   Further, in order to achieve the object mentioned above, the present invention can be modified and changed as follows in the method of manufacturing the electrode catalyst material in accordance with the invention mentioned above.
(7) The heat treatment is a three-stage heat treatment constructed by a heat treatment at 200 to 400°C under an oxidizing atmosphere, a heat treatment at 800 to 1200°C under a non-oxidizing atmosphere, and a heat treatment at 80 to 200°C under an oxidizing atmosphere.

In accordance with the present invention, it is possible to provide the electrode catalyst material in which an electric conductivity is enhanced as a whole of an electrode catalyst so as to lower a resistance loss, as well as a dropout and an aggregation of the catalyst metal particle are prevented by suppressing the corrosion and the disappearance by the catalyst metal in the conductive catalyst support, and the method of manufacturing the same. Further, it is possible to provide the proton-exchange membrane fuel cell having a high durability by applying the electrode catalyst material mentioned above to the fuel cell.

Other objects, features and advantages of the invention will become apparent from the following description of the embodiments of the invention taken in conjunction with the accompanying drawings.

### Brief description of the several views of the drawing

Fig. 1 is a partly enlarged cross sectional schematic view of an electrode catalyst material in accordance with the present invention;
Fig. 2 is a cross sectional schematic view of a proton-exchange membrane fuel cell in accordance with the present invention;
Fig. 3 is a cross sectional schematic view of an example (a portable information terminal) of a fuel cell power generation system mounting the proton-exchange membrane fuel cell in accordance with the present invention thereon; and
Fig. 4 is a result of XPS analysis of a carbon support protection layer in an electrode catalyst material in accordance with an embodiment 1.

### Description of Reference Numerals

- 10: electrode catalyst material
- 11: carbon support
- 12: carbon support protection layer
- 13: catalyst metal particle
- 20: proton-exchange membrane fuel cell
- 21: anode
- 22: solid polymer electrolyte membrane
- 23: cathode
- 24: membrane/electrode joint body
- 25: fuel
- 26: exhaust gas and waste solution
- 27: oxidizer gas
- 28: exhaust gas
- 29: external circuit
- 30: portable information terminal
- 31: display device
- 32: antenna
- 33: main board
- 34: lithium ion secondary cell
- 35: proton-exchange membrane fuel cell
- 36: fuel cartridge
- 37: hinge

### Detailed description of the invention

A description will be given below of an embodiment in accordance with the present invention with reference to the accompanying drawings.

### (electrode catalyst material)

In an electrode catalyst material in a fuel cell, it is requested to have a high electric conductivity in such a manner that a resistance loss goes down with respect to a movement of an electron going with a power generation, and since a catalyst metal particle exists while being exposed to a high electric potential, it is requested to have a high corrosion resistance. This request is a very severe request electrochemically.

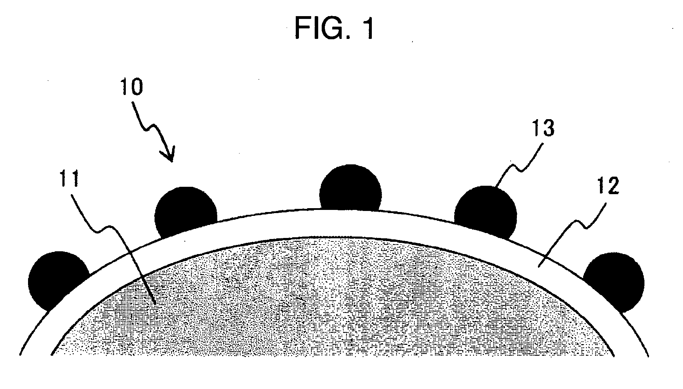

Fig. 1 is a partly enlarged cross sectional schematic view of an electrode catalyst material in accordance with the present invention. As shown in Fig. 1, an electrode catalyst material 10 in accordance with the present invention is structured such that a carbon support protection layer 12 is formed in a coating manner on a surface of a carbon support 11, and a catalyst metal particle 13 is supported thereon. In other words, the catalyst metal particle 13 does not directly come into contact with the carbon support 11. Further, the carbon support protection layer 12 is made of a material having a higher corrosion resistance than that of the carbon support 11. In accordance with the structure mentioned above, a corrosion and a disappearance of the carbon support 11 by the catalyst metal particle 13 can be suppressed, and it is possible to obtain at least a high corrosion resistance.

The carbon support protection layer 12 is a composite material in which 20 atomic % or more of the included metal element is constructed by a silicone, and the silicone exists in a state of an oxide and a carbide. The silicone mainly forms the oxide in a side of the front layer of the carbon support protection layer 12, and the silicone mainly forms the carbide in a side of the carbon support 11. Since the silicone carbide in the side of the carbon support 11 I has a higher affinity to the carbon support 11, it plays a part in the carbon support protection layer 12 coating the carbon support 11 by a strong adhesion force as well as playing a part in enhancing a rate of coating the surface of the carbon support 11. On the other hand, since the silicone oxide has a higher stability (higher corrosion resistance and durability) than the silicone carbide, it plays a part in applying a higher stability to the carbon support protection layer 12. In this case, a combined state (the oxide or the carbide) of the silicone can be analyzed, for example, by using an X-ray photoelectron spectroscopy analysis (XPS).

If the rate of the silicone included in the carbon support protection layer 12 becomes lower than 20 atomic %, an absolute amount of the silicone carbide is reduced and the rate coating the surface of the carbon support 11 (a coating degree of the carbon support protection layer 12) is lowered too much. Accordingly, this is not preferable. Therefore, it is preferable that the rate of the silicone in the included metal element is equal to or more than 20 atomic %. More preferably, it is equal to or more than 50 atomic %, and further preferably, it is equal to or more than 60 atomic %. In this case, the rate of the metal element included in the carbon support protection layer 12 can be measured and analyzed, for example, by using an energy dispersive X-ray spectroscopy (EDX) or a high frequency induction coupled plasma emission spectrometry (ICP).

Further, it is possible to make the coating degree of the carbon support protection layer 12 equal to or more than 40 % by making the rate of the silicone in the included metal element equal to or more than 20 atomic %. If the coating degree becomes lower than 40 %, the corrosion resistance and the durability of the electrode catalyst material are rapidly lowered.

It is preferable that an average thickness of the carbon support protection layer 12 is less than 10 nm, and it is more preferable that it is less than 5 nm. This is provided for suppressing an excessive increase of the resistance loss by the carbon support protection layer 12 since the electric conductivities of the oxide and the carbide of the silicone are comparatively low. Further, it is possible to reduce the resistance loss by setting the metal oxide having the higher electric conductivity than the oxide and the carbide of the silicone to a composite material which is mixed to the carbon support protection layer 12.

As the other metal element than the silicone included in the carbon support protection layer 12, it is preferable to employ at least one kind which is selected from a titanium, a germanium, a niobium, a zirconium, a molybdenum, a ruthenium, a rhodium, a tin, a tantalum, a tungsten, and an osmium, and it is preferable that the other metal elements than the silicone exist in the carbon support protection layer 12 in a state of the oxide. The oxides of these elements have a higher stability as well as having a higher electric conductivity. The higher stability means that an elusion of a metal cation is small even under a power generation environment of the fuel cell, and causes a non-reduction of a power generation performance of the fuel cell. In this case, if the elution of the metal cation occurs, the eluting metal cation is coupled to an ion exchange group in the electrolyte so as to obstruct a movement of the proton, thereby lowering an output of the fuel cell.

The carbon support 11 is not specifically limited, but can employ a conventional material (for example, a carbon black, an active carbon, a graphite, a carbon nano tube or the like). In this case, 10 to 2000 m²/g is preferable as a specific surface area of the carbon support 11.

The catalyst metal particle 13 is not specifically limited, either, but can employ a conventional material (for example, at least one kind which is selected from a ruthenium, a palladium, an iridium, a platinum, and a gold. In this case, in the case that it is used as an anode side electrode catalyst material of the DMFC, or an anode side electrode catalyst material of the PEFC using a hydrogen including a carbon monoxide as a fuel, it is preferable to employ an alloy of the platinum and ruthenium in the light of a catalytic activity. Further, in the case that it is used as a cathode side electrode catalyst material of the DMFC or the PEFC, and an anode side electrode catalyst material of the PEFC using a hydrogen which does not include the carbon monoxide as the fuel, it is preferable to use the platinum.

### (method of manufacturing electrode catalyst material)

The electrode catalyst material 10 in accordance with the present invention can be manufactured by carrying out a step of coating the carbon support 11 by the precursor including the polycarbosilane derivative, a step of forming the carbon support protection layer 12 by applying a heat treatment to the carbon support 11 coated by the precursor, and a step of making the carbon support 11 in which the carbon support protection layer 12 is formed support the catalyst metal particle 13.

In this case, as the polycarbosilane derivative, it is possible to employ a polycarbosilane, an allylhydridopolycarbosilane and the like. It is possible to enhance an adhesion between the carbon support 11 and the carbon support protection layer 12, by using the polycarbosilane derivative. As the method of coating the carbon support 11 by the precursor including the polycarbosilane derivative, for example, there can be listed up a method of diluting the polycarbosilane derivative by a solvent (for example, a hexane, an acetone, a toluene, a tetrahydrofuran or the like), mixing with the carbon support 11, and thereafter drying and removing the solvent.

As the heat treatment for forming the carbon support protection layer 12, it is preferable to employ a three-stage heat treatment including a heat treatment at 200 to 400°C under an oxidizing atmosphere (for example, under an atmospheric air), a heat treatment at 800 to 1200°C under a non-oxidizing atmosphere (for example, under an inert gas), and a heat treatment at 80 to 200°C under an oxidizing atmosphere (for example, under an atmospheric air). It is possible to improve a yield by carrying out the heat treatment in the first stage. The polycarbosilane derivative comes to a silicone carbide as a whole while forming a coupling to the surface of the carbon support 11, by carrying out the heat treatment in the second stage. Thereafter, the front layer region of the carbon support protection layer 12 is oxidized and the silicone oxide is formed, by carrying out the heat treatment in the third stage. As mentioned above, since the silicone oxide is stable under a power generation environment of the fuel cell, a higher stability (higher corrosion resistance and durability) can be obtained by forming the silicone oxide in the front layer region of the carbon support protection layer 12.

Further, in the case of mixing the other metal element than the silicone with the carbon support protection layer 12, the metal alkoxide of the metal element, the polycarbosilane derivative and the solvent are sufficiently mixed, and are thereafter mixed with the carbon support 11. Next, the heat treatment for forming the carbon support protection layer 12 is carried out after forming the oxide by hydrolyzing the metal alkoxide. In this case, the other metal element than the silicone included in the carbon support protection layer 12 comes to the oxide, and only the silicone is in a state of the oxide and the carbide. As the metal alkoxide, a methoxide, an ethoxide, a propoxide and the like can be used. For example, in the case of a titanium, it is possible to use a titanium methoxide, a titanium ethoxide, a titanium isopropoxide and the like.

The method of making the carbon support 11 in which the carbon support protection layer 12 is formed support the catalyst metal particle 13 is not particularly limited, but can employ a conventional method (for example, an electroless plating method of reducing the catalyst metal precursor by a reducing agent in a solution). The used catalyst metal precursor is not particularly limited. For example, in the case of supporting the platinum, it is possible to use a hexachloroplatinic acid, a potassium hexachloro platinate, a sodium hexachloro palatinate, a tetrachloroplatinic acid, a potassium tetrachloro platinate, a sodium tetrachloro palatinate, a tetraamine platinum chloride salt, a dinitrodiamine platinum and the like. Further, the used reducing agent is not particularly limited, but it is possible to use a conventional one (for example, a sodium borohydride, a hydrazine, a hypophosphorous acid, a formaldehyde and the like).

Further, as the other supporting method of the catalyst metal particle, for example, it is possible to employ an impregnating method. In this case, the catalyst metal particle 13 is precipitated by infiltrating the solution including the catalyst metal precursor into the carbon support 11 in which the carbon support protection layer 12 is formed, thereafter removing the solvent by drying, and heat treating in the reducing atmosphere including the hydrogen.

### (membrane/electrode joint body)

A membrane/electrode joint body in accordance with the present invention is a membrane/electrode joint body of a proton-exchange membrane fuel cell which is integrated by laminating an anode, a solid polymer electrolyte membrane and a cathode, wherein an electrode catalyst material of at least one of the anode and the cathode is the electrode catalyst material in accordance with the present invention mentioned above. The material of the solid polymer electrolyte membrane is not particularly limited, but a conventional one can be used.

For example, there can be used a sulfonic acid type fluorine polymer material represented by a polyperfluoro styrene sulfonic acid, a perfluorocarbon sulfonic acid and the like, a material obtained by sulfonating a hydrocarbon polymer such as a polystyrene sulfonic acid, a sulfonic acid polyether sulfone, a sulfonic acid polyether ether ketone and the like, or a material obtained by alkyl sulfonating a hydrocarbon polymer. By using these materials, it is possible to provide a membrane/electrode joint body which is activated at a temperature equal to or lower than about 80°C.

Further, by using a composite electrolyte membrane obtained by micro dispersing a hydrogen ion conductive inorganic substance such as a tungsten oxide hydrate, a zirconium oxide hydrate, a tin oxide hydrate or the like into a heat resisting resin or a sulfonic acid resin, it is possible to provide a membrane/electrode joint body which is activated at a higher temperature area. In any case, in the case that a proton conductivity is higher, and an intended use is for DMFC, it is preferable in the light of a power generation capacity factor to use a solid polymer electrolyte membrane in which a methanol permeability is lower.

A method of manufacturing the membrane/electrode joint body is not particularly limited, and can utilize the conventional method. For example, there are a method of dispersing the electrode catalyst material 10 in accordance with the present invention and a binder into a solvent, and applying this directly to the solid polymer electrolyte membrane in accordance with a spray method, an ink jet method or the like, a method of attaching to the solid polymer electrolyte membrane in accordance with a transcription after applying to a polytetrafluoroethylene sheet or the like, and a method of attaching to the solid polymer electrolyte membrane after applying to a gas diffusion layer. In this case, the same material as the material of the solid polymer electrolyte membrane mentioned above is often utilized as the binder.

### (proton-exchange membrane fuel cell)

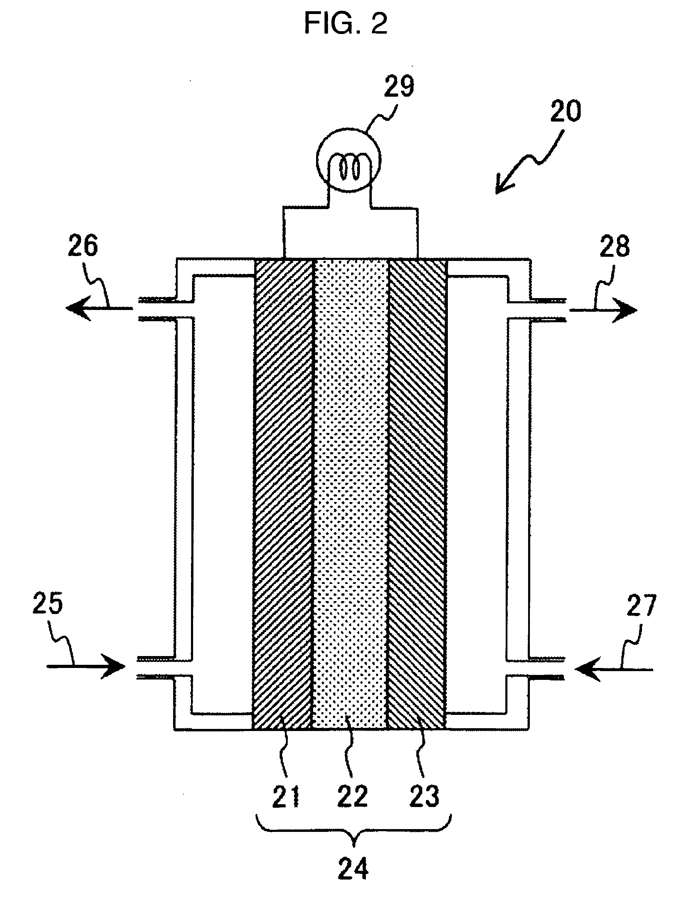

The proton-exchange membrane fuel cell in accordance with the present invention is characterized by utilizing the membrane/electrode joint body mentioned above. Fig. 2 is a cross sectional schematic view of a proton-exchange membrane fuel cell in accordance with the present invention. As shown in Fig. 2, a proton-exchange membrane fuel cell 20 in accordance with the present invention is constructed mainly by a membrane/electrode joint body 24 which is integrated by bonding an anode 21 having the electrode catalyst material 10 in accordance with the present invention, a solid polymer electrolyte membrane 22, and a cathode 23 having the electrode catalyst material 10 in accordance with the present invention.

A fuel 25 such as a hydrogen, a methanol or the like is supplied to the anode 21 side, and an exhaust gas and a waste liquid 26 (unreacted hydrogen and methanol, a carbon dioxide and the like) are discharged therefrom. Further, an oxidizer gas 27 such as an oxygen, an air or the like is supplied to the cathode 23 side, and an exhaust gas 28 (an unreacted gas and a water) is discharged therefrom. The anode 21 and the cathode 23 are connected to an external circuit 29 so as to feed an electricity. In this case, a gas diffusion layer (not shown) constructed by a carbon paper, a carbon cloth or the like is arranged generally in the anode 21 and the cathode 23.

Since the membrane/electrode joint body 24 and the proton-exchange membrane fuel cell 20 which are obtained as mentioned above use the electrode catalyst material 10 in accordance with the present invention, they have a high durability.

### (fuel cell power generation system)

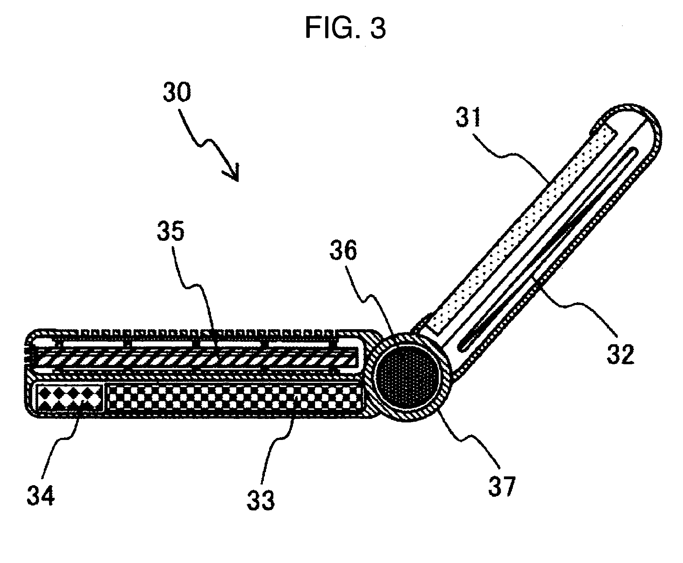

Fig. 3 is a cross sectional schematic view of one example (a portable information terminal) of a fuel cell power generation system which mounts the proton-exchange membrane fuel cell in accordance with the present invention thereon. As shown in Fig. 3, a portable information terminal 30 has a foldable structure, and two folded portions thereof are connected by a hinge 37 having a fuel cartridge 36 built-in. A display device 31 doubling as a touch panel type input device and an antenna 32 are embedded in one of two folded portions. Further, another portion has a main board 33 mounting electronic equipment such as a processor, a memory, an electric power control portion and the like and an electronic circuit, a lithium ion secondary battery 34 and a proton-exchange membrane fuel cell 35 built-in.

The portable information terminal 30 as mentioned above can be operated continuously by replacing the fuel cartridge 36 without carrying out an electric charge from a fixed power supply. Further, it is possible to use for a long period by utilizing the proton-exchange membrane fuel cell in accordance with the present invention having a high durability.

### Embodiment

A description will be specifically given below of the present invention on the basis of embodiments, however, the present invention is not limited to the embodiments disclosed here.

### [preparation of evaluation sample]

### (preparation of embodiment 1)

After preparing a precursor solution obtained by mixing 1.2 g of allylhydridopolycarbosilane (polycarbosilane derivative) and 5 g of hexane (solvent), the precursor solution is well mixed with 1.0 g of carbon black (manufactured of Lion Corporation, carbon ECP, specific surface area 800 m²/g, primary particle diameter 40 nm, void ratio 60 %) in a mortar. Next, a carbon support coated with the precursor including the polycarbosilane derivative is obtained by drying and removing the hexane at 50°C in an atmospheric air. Thereafter, a carbon support in accordance with an embodiment 1 which is coated with a carbon support protection layer is obtained by sequentially carrying out a heat treatment for twelve hours at 200°C in the atmospheric air, a heat treatment for three hours at 900°C in an argon and a heat treatment for three hours at 100°C in the atmospheric air, as a heat treatment (a three-stage heat treatment) for forming the carbon support protection layer.

### (preparation of embodiment 2)

After preparing a precursor solution obtained by mixing 0.6 g of allylhydridopolycarbosilane, 1.6 g of titanium ethoxide, 0.1 g of niobium ethoxide and 5 g of hexane, the precursor solution is well mixed with 1.0 g of carbon black (carbon ECP) in a mortar. Next, a carbon support coated with the precursor including the polycarbosilane derivative is obtained by drying and removing the hexane at 50°C in the atmospheric air. Thereafter, a carbon support in accordance with an embodiment 2 which is coated with a carbon support protection layer is obtained by carrying out the same three-stage heat treatment as the embodiment 1.

### (preparation of embodiment 3)

After preparing a precursor solution obtained by mixing 0.3 g of allylhydridopolycarbosilane, 2.5 g of titanium ethoxide, 0.2 g of niobium ethoxide and 5 g of hexane, the precursor solution is well mixed with 1.0 g of carbon black (carbon ECP) in a mortar. Next, a carbon support coated with the precursor including the polycarbosilane derivative is obtained by drying and removing the hexane at 50°C in the atmospheric air. Thereafter, a carbon support in accordance with an embodiment 3 which is coated with a carbon support protection layer is obtained by carrying out the same three-stage heat treatment as the embodiment 1.

### (preparation of comparative example 1)

After preparing a precursor solution obtained by mixing 0.1 g of allylhydridopolycarbosilane, 3.0 g of titanium ethoxide, 0.2 g of niobium ethoxide and 5 g of hexane, the precursor solution is well mixed with 1.0 g of carbon black (carbon ECP) in a mortar. Next, a carbon support coated with the precursor including the polycarbosilane derivative is obtained by drying and removing the hexane at 50°C in the atmospheric air. Thereafter, a carbon support in accordance with a comparative example 1 which is coated with a carbon support protection layer is obtained by carrying out the same three-stage heat treatment as the embodiment 1.

### (preparation of comparative example 2)

After preparing a solution obtained by mixing 3.3 g of titanium ethoxide, 0.2 g of niobium ethoxide and 5 g of hexane, the solution is well mixed with 1.0 g of carbon black (carbon ECP) in a mortar. Next, a carbon support coated with the precursor is obtained by drying and removing the hexane at 50°C in the atmospheric air. Thereafter, a carbon support in accordance with a comparative example 2 which is coated with a carbon support protection layer is obtained by carrying out the same three-stage heat treatment as the embodiment 1.

### (preparation of comparative example 3)

After preparing a precursor solution obtained by mixing 3.4 g of tetraethyl orthosilicate and 5 g of hexane, the precursor solution is well mixed with 1.0 g of carbon black (carbon ECP) in a mortar. Next, the hexane is dried and removed at 50°C in the atmospheric air, is thereafter mixed with 100 ml of 0.01 mol/l hydrochloric acid water solution, and is agitated for one hour at 70°C. Thereafter, 25 mass % of ammonia water solution is added at 0.2 g, and is further agitated for twenty four hours at 70°C. Thereafter, a carbon support coated with the precursor is obtained by filtrating, rinsing out by an ion exchanged water and thereafter drying at 100°C in the atmospheric air. Thereafter, a carbon support in accordance with a comparative example 3 which is coated with a carbon support protection layer is obtained by carrying out the same three-stage heat treatment as the embodiment 1.

### (preparation of comparative example 4)

A carbon support in accordance with a comparative example 4 which is coated with a carbon support protection layer is obtained by carrying out the same procedure as the embodiment 1 except setting a mass of the allylhydridopolycarbosilane to 6.0 g.

### (preparation of comparative example 5)

Only the carbon black (carbon ECP) is prepared as a carbon support in accordance with a comparative example 5 in which a carbon support protection layer is not formed.

### [analysis and measurement]

### (component analysis of carbon support protection layer)

Compositions of the carbon supports (the embodiments 1 to 3 and the comparative examples 1 to 4) which are coated with the carbon support protection layer prepared as mentioned above are ICP analyzed, and a rate (unit: atomic %) of the metal element included in the carbon support protection layer is searched. A result thereof is shown in Table 1.

### (combined state analysis of metal element in carbon support protection layer)

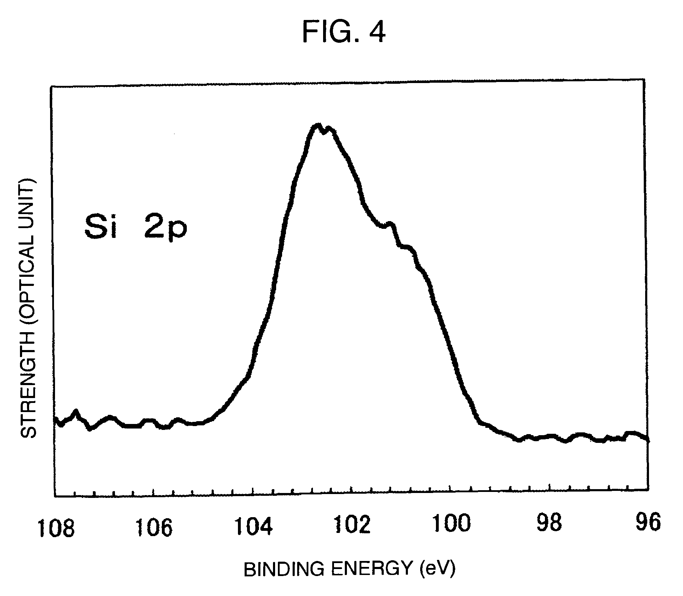

A combined state of the included metal element is analyzed by XPS with respect to the carbon support protection layer (the embodiments 1 to 3 and the comparative examples 1 to 4) prepared as mentioned above. Fig. 4 is a result of XPS analysis of the carbon support protection layer in the electrode catalyst material in accordance with the embodiment 1. As is known from Fig. 4, in the carbon support protection layer in accordance with the embodiment 1, a peak caused by a silicone carbide (SiC) appears in the vicinity of 101 eV, as well as a peak caused by a silicone oxide (SiO₂ appearing in the vicinity of 103 eV In other words, it is confirmed that the silicone coexists in a state of an oxide and a carbide in the carbon support protection layer in accordance with the embodiment 1. Further, a rate of SiO₂ and SiC is estimated as 7 : 3 on the basis of a rate of a peak strength.

Analyzing the other samples in the same manner, it is confirmed that the silicone coexists in the state of the oxide and the carbide, in the embodiments 2 to 3, the comparative examples 1 and 2, and the comparative example 4, and the titanium and the niobium exist only in the state of the oxide. Further, in the comparative example 3, it is confirmed that the silicone exists only in the state of the oxide, and the silicone carbide does not appear. A result thereof is described together in Table 1.

**Table 1 Rate of metal element in carbon support protection layer and combined state of the metal element**

| | Rate of metal element in carbon support protection layer (atomic %) | | | Combined state of metal element | |
|---|---|---|---|---|---|
| | Si | Ti | Nb | carbide | oxide |
| Embodiment 1 | 100 | 0 | 0 | Si | Si |
| Embodiment 2 | 63 | 35 | 2 | Si | Si, Ti, Nb |
| Embodiment 3 | 35 | 62 | 3 | Si | Si, Ti, Nb |
| Comparative example 1 | 16 | 80 | 4 | Si | Si, Ti, Nb |
| Comparative example 2 | 0 | 95 | 5 | none | Ti, Nb |
| Comparative example 3 | 100 | 0 | 0 | none | Si |
| Comparative example 4 | 100 | 0 | 0 | Si | Si |

### (coating degree of carbon support protection layer)

A coating degree of the carbon support protection layer with respect to the carbon support is searched. A searching method is carried out by comparing a BET ratio surface area in accordance with a water vapor adsorption method with a BET ratio surface area in accordance with a nitrogen adsorption method. In this case, a hydrophilic surface area is detected mainly by the water vapor adsorption method. Since the carbon surface is hydrophobic, it is hardly detected by the water vapor adsorption method, however, since the metal oxide constructing the surface of the carbon support protection layer is hydrophilic, it can be detected. In other words, it is possible to measure the surface area of the carbon support protection layer. On the other hand, an entire surface of the carbon support is detected by the nitrogen adsorption method. Accordingly, it can be said that the higher the rate of the water vapor adsorption BET ratio surface area with respect to the nitrogen adsorption BET ratio surface area is, the higher the coating degree of the carbon support protection layer with respect to the carbon support is. A result thereof is shown in Table 2 mentioned below.

### (average thickness of carbon support protection layer)

On the basis of the result of the composition analysis of the carbon support which is coated by the carbon support protection layer, an average thickness of the carbon support protection layer is determined by calculation. The carbon support protection layer is calculated on the assumption that it does not make an intrusion into a micro hole of the carbon black, but coats an outer surface of the carbon black at a uniform thickness in the coating degree determined as mentioned above. In this case, the specific surface area which does not include the micro hole of the carbon black is calculated on the basis of the data (the primary particle diameter, the void ratio and the density 2.3 g/cm³ of graphite), it is 85 m²/g. Further, the density of the silicone oxide (SiO₂) included in the carbon support protection layer is set to 2.2 g/c m³, the density of the silicone carbide (SiC) is set to 3.2 g/c m³, and the rate between SiO₂ and SiC is set to 7 : 3 (in accordance with the XPS analysis). A result thereof is described together in Table 2.

### (specific resistance of carbon support coated by carbon support protection layer)

A specific resistance of the powder of the carbon support coated by the carbon support protection layer is measured. An evaluation method will be described. The powder of the carbon support coated by the carbon support protection layer is inserted to a cylindrical hollow jig made of a polytetrafluoroethylene, and is pinched by electrodes made of a stainless steel from both ends thereof, and an electric resistance value is measured on the basis of an electric current value flowing at a time of applying an electric voltage 1 V, while applying a surface pressure of 290 kg/cm² to the carbon support powder by a hand press. The specific resistance is calculated on the basis of a change of the electric resistance value at a time of changing a distance between the electrodes, by changing an amount of the carbon support powder inserted to the cylindrical hollow jig. A result thereof is described together in Table 2.

**Table 2 Result of measurement of coating degree, average thickness and specific resistance of carbon support coated by carbon support protection layer**

| | water vapor adsorption BET specific surface area | nitrogen adsorption BET specific surface area | coating degree of carbon support protection layer | average thickness of carbon support protection layer | specific resistance of carbon support |
|---|---|---|---|---|---|
| Embodiment 1 | 123 m²/ g | 140 m²/g | 88% | 2.7 nm | 47Ωcm |
| Embodiment 2 | 115 m²/ g | 142 m²/ g | 86% | | |
| Embodiment 3 | 84 m²/ g | 202 m²/ g | 42% | | |
| Comparative example 1 | 52 m²/ g | 279 m²/ g | 19% | | |
| Comparative example 2 | 32 m²/ g | 334 m²/ g | 10% | | |
| Comparative example 3 | 45 m²/ g | 360 m²/ g | 13% | | |
| Comparative example 4 | 131 m²/ g | 138 m²/ g | 95% | 14 nm | 1600 Ωcm |
| Comparative example 5 | 6 m²/ g | 824 m²/ g | <1% | no coating | |

As shown in Table 1 and Table 2, in the embodiments 1 to 3 in which 20 atomic % or more of the metal element included in the carbon support protection layer is the silicone, and the silicone exists in a state of the oxide and the carbide, the coating degree of the carbon support protection layer with respect to the carbon support exhibits a higher coating degree which is equal to or higher than 40 %. On the contrary, in the comparative examples 1 to 3 which deflect from the provision of the present invention, the coating degree rapidly lowers.

Further, on the basis of the result of the specific resistance of the powder of the carbon support, the following matters can be said. Since the thickness of the electrode catalyst layer in the proton-exchange membrane fuel cell is generally equal to or more than 5 µm, the electric resistance values per 1 cm² of the electrode catalyst layer 1 cm² in the case of using the carbon support in accordance with the embodiment 1 and in the case of using the carbon support in accordance with the comparative example 4 are respectively estimated as 24 mΩ and 800 mΩ. As a result, voltage losses at a time of picking up the power generation current of 1 A/cm² come to 24 mV and 800 mV, respectively in the embodiment 1 and the comparative example 4. In this case, since an electro motive force of the solid polymer fuel cell is about 1000 mV, there is a case that it becomes hardly possible to pick up the power generation voltage in the case of using the carbon support in accordance with the comparative example 4. On the basis of the result mentioned above, it is desirable to make the thickness of the carbon support protection layer at least less than 10 nm, and it is more desirable to make it less than 5 nm.

### (durability as fuel cell)

With respect to the carbon supports in accordance with the embodiments 1 to 3 and the comparative examples 1 to 3, the catalyst metal particle is supported in accordance with the following procedures. 300 mL of ion exchanged water is added by 1.0 g carbon support so as to be sufficiently agitated, is thereafter added by 0.6 g chloroplatinic acid water solution (including 28 weight % platinum) and 0.12 g hypophosphorous acid, and is agitated for four hours at 90°C while regulating pH by a sodium hydroxide. Thereafter, it is dried at 100°C in the atmospheric air after being filtrated and rinsed out by the ion exchanged water, thereby preparing the electrode catalyst materials in accordance with the embodiments 1 to 3 and the comparative examples 1 to 3.

The single cell of proton-exchange membrane fuel cell (refer to Fig. 2) is assembled by using the obtained electrode catalyst materials (the fuel cells in accordance with the embodiments 1 to 3 and the comparative examples 1 to 3). With respect to the assembled single cell, a continuous power generation test is carried out while supplying the hydrogen gas as the fuel and supplying the air as the oxidizing agent, and the durability as the fuel cell is searched. As a result, the electric voltage is hardly changed even by the power generation for 500 hours, in the fuel cells in accordance with the embodiments 1 to 3. On the contrary, in the fuel cells in accordance with the comparative examples 1 to 3, the electric voltage is clearly lowered from the power generation for about 200 hours. This is because the fuel cells in accordance with the embodiments 1 to 3 are hard to cause the corrosion and the disappearance of the carbon component on the basis of the coating degree of he carbon support protection layer equal to or more than 40 %, thereby contributing to a high durability.

It should be further understood by those skilled in the art that the foregoing description has been made on embodiments of the invention and that various changes and modifications may be made in the invention without departing from the spirit of the invention and the scope of the appended claims.

## Claims

1. An electrode catalyst material (10) for a fuel cell having a catalyst metal particle (13) and a carbon support (11) supporting said catalyst metal particle (13), **characterized in that** a carbon support protection layer (12) including a metal element is formed in a coating manner on a surface of said carbon support (11), a silicone is included at 20 atomic % or more in the metal element contained in said carbon support protection layer (12), and said silicone exists in a state of an oxide and a carbide.

2. An electrode catalyst material (10) as claimed in claim 1, **characterized in that** the other metal element than the silicone included in said carbon support protection layer (12) is constructed by at least one which is selected from a titanium, a germanium, a niobium, a zirconium, a molybdenum, a ruthenium, a rhodium, a tin, a tantalum, a tungsten, and an osmium, and said other metal element than the silicon exists in a state of an oxide.

3. An electrode catalyst material (10) as claimed in claim 1, **characterized in that** an average thickness of said carbon support protection layer (12) is less than 10 nm.

4. An electrode catalyst material (10) as claimed in claim 1, **characterized in that** a coating degree of said carbon support protection layer (12) with respect to said carbon support (11) is equal to or more than 40 %.

5. A membrane/electrode joint body (24) of a proton-exchange membrane fuel cell (35) integrated by bonding an anode (21), a solid polymer electrolyte membrane (22) and a cathode (23), **characterized in that** an electrode catalyst material (10) of at least one of said anode (21) and said cathode (23) is the electrode catalyst materials as claimed in any one of claims 1 to 4.

6. A proton-exchange membrane fuel cell (35), **characterized in that** the proton-exchange membrane fuel cell utilizes the membrane/electrode joint body (24) as claimed in claim 5.

7. A fuel cell power generating system, **characterized in that** the fuel cell power generating system mounts the proton-exchange membrane fuel cell (35) as claimed in claim 6.

8. A method of manufacturing an electrode catalyst material (10) for a proton-exchange membrane fuel cell (20) having a catalyst metal particle (13) and a carbon support (11) supporting said catalyst metal particle (13), in which a carbon support protection layer (12) including a metal element is formed in a coating manner on a surface of said carbon support (11), a silicone is included at 20 atomic % or more in the metal element contained in said carbon support protection layer (12), and said silicone exists in a state of an oxide and a carbide, **characterized in that** the method comprises:
a step of coating said carbon support (11) by a precursor including a polycarbosilane derivative;
a step of forming the carbon support protection layer (12) by applying a heat treatment to the carbon support (11) coated by said precursor; and
a step of making the carbon support (11) in which said carbon support protection layer (12) is formed support the catalyst metal particle (13).

9. A method of manufacturing an electrode catalyst material (10) as claimed in claim 8, **characterized in that** said heat treatment is a three-stage heat treatment constructed by a heat treatment at 200 to 400°C under an oxidizing atmosphere, a heat treatment at 800 to 1200°C under a non-oxidizing atmosphere, and a heat treatment at 80 to 200°C under an oxidizing atmosphere.
